# EUROPEAN PATENT APPLICATION

(11) **EP 4 618 641 A1**
(43) Date of publication of application: **17.09.2025**
(21) Application number: 23887871.4
(22) Date of filing: 31.10.2023
(51) Int. Cl.: H04W 56/00

(54) **UPLINK TRANSMISSION TIME DETERMINATION METHOD, TERMINAL, AND NETWORK SIDE DEVICE**

(30) Priority: 07.11.2022 CN 202211385356
(71) Applicant: Vivo Mobile Communication Co., Ltd., Dongguan, Guangdong 523863 (CN)
(72) Inventor: SUN, Rongrong, Dongguan, Guangdong 523863 (CN); TAMRAKAR, Rakesh, Dongguan, Guangdong 523863 (CN); LIU, Hao, Dongguan, Guangdong 523863 (CN)
(74) Representative: Walaski, Jan Filip
(86) International application number: PCT/CN2023/128589
(87) International publication number: WO 2024/099181

(57) **Abstract**

The present application relates to the technical field of communications, and discloses an uplink transmission time determination method, a terminal, and a network side device. The method comprises: receiving, from the network side device, parameter configuration information corresponding to one or more serving cells, the parameter configuration information comprising timing advance group (TAG) identifiers that are associated with respective transmission objects; according to the parameter configuration information, determining, among the transmission objects corresponding to the one or more serving cells, a target transmission object corresponding to a target serving cell where the terminal is located; and determining uplink transmission time of the target transmission object according to a target TAG identifier associated with the target transmission object.

## Description

### CROSS-REFERENCE TO RELATED APPLICATIONS

This application claims priority to Chinese patent application No. 202211385356.2, filed with the China National Intellectual Property Administration on November 7, 2022 entitled "UPLINK TRANSMISSION TIME DETERMINATION METHOD, TERMINAL, AND NETWORK SIDE DEVICE", which is incorporated herein by reference in its entirety.

### TECHNICAL FIELD

This application belongs to the field of communication technologies, and specifically relates to an uplink transmission time determination method, a terminal, and a network side device.

### BACKGROUND

A multiple transmission and reception point (transmission and reception point, TRP) transmission technology is introduced in release 16 (Release 16, R16) of a third generation partnership project (Third Generation Partnership Project, 3GPP) to improve data transmission throughput. To ensure orthogonality of uplink transmission and avoid intra-cell interference, a base station requires that times when signals from different terminals (User Equipment, UE) in the same sub-frame but in different frequency domain resources arrive at the base station are basically aligned. As long as receiving uplink data sent by the UE within a range of a cyclic prefix (Cyclic Prefix, CP), the base station can correctly decode the uplink data. Therefore, uplink synchronization requires that the times when the signals from different UEs in the same sub-frame arrive at the base station falls within the CP. A timing advance (Timing Advance, TA) is used for uplink transmission of the UE, to ensure that an uplink packet of the UE arrives at the base station within expected time. Specific implementation may be briefly summarized as that the base station measures an uplink signal, predicts a delay of a radio frequency transmission time caused by a distance, sends a timing advance command (Timing Advance Command, TAC) to the UE, and notifies the UE to send the uplink transmission in advance within a corresponding time amount.

The same TA is used for uplink transmission sent to different TRPs in a multi-TRP scenario in a related technology. In consideration of a large difference between locations of different TRPs, sharing of one uplink transmission time may cause that uplink transmission time difference between different users arriving at one TRP exceeds the CP. Consequently, inter-user interference is caused, uplink transmission performance is reduced, and an objective of improving throughput by multi-TRP transmission cannot be achieved.

### SUMMARY

Embodiments of this application provide an uplink transmission time determination method, a terminal, and a network side device, which can solve a problem that the same TA is used for uplink transmission sent to different TRPs in a multi-TRP scenario in a related technology to cause poor uplink transmission performance.

According to a first aspect, an uplink transmission time determination method is provided, which is applied to a terminal. The method includes:
receiving, from a network side device, parameter configuration information corresponding to one or more serving cells, where the parameter configuration information includes timing advance group TAG identifiers, and the TAG identifiers are associated with respective transmission objects;
determining, in the transmission objects corresponding to the one or more serving cells according to the parameter configuration information, a target transmission object corresponding to a target serving cell in which the terminal is located; and
determining an uplink transmission time of the target transmission object according to a target TAG identifier associated with the target transmission object.

According to a second aspect, an uplink transmission time determination method is provided, which is applied to a network side device. The method includes:
sending parameter configuration information corresponding to one or more serving cells to a terminal, where the parameter configuration information includes TAG identifiers, and the TAG identifiers are associated with respective transmission objects, and the parameter configuration information is used for determining an uplink transmission time of a target transmission object corresponding to a target serving cell.

According to a third aspect, a terminal is provided, including:
a first receiving module, configured to receive, from a network side device, parameter configuration information corresponding to one or more serving cells, where the parameter configuration information includes timing advance group TAG identifiers, and the TAG identifiers are associated with respective transmission objects;
a first determination module, configured to determine, in the transmission objects corresponding to the one or more serving cells according to the parameter configuration information, a target transmission object corresponding to a target serving cell in which the terminal is located; and
a second determination module, configured to determine an uplink transmission time of the target transmission object according to a target TAG identifier associated with the target transmission object.

According to a fourth aspect, a network side device is provided, including:
a first sending module, configured to send parameter configuration information corresponding to one or more serving cells to a terminal, where the parameter configuration information includes TAG identifiers, and the TAG identifiers are associated with respective transmission objects, and the parameter configuration information is used for determining an uplink transmission time of a target transmission object corresponding to a target serving cell.

According to a fifth aspect, a terminal is provided. The terminal includes a processor and a memory. The memory stores a program or instructions executable on the processor. The program or instructions, when executed by the processor, implement the steps of the method according to the first aspect.

According to a sixth aspect, a terminal is provided, including a processor and a communication interface, where the communication interface is configured to receive parameter configuration information corresponding to one or more serving cells from a network side device. The parameter configuration information includes timing advance group TAG identifiers, and the TAG identifiers are associated with respective transmission objects. The processor is configured to determine, in the transmission objects corresponding to the one or more serving cells according to the parameter configuration information, a target transmission object corresponding to a target serving cell in which the terminal is located, and to determine an uplink transmission time of the target transmission object according to a target TAG identifier associated with the target transmission object.

According to a seventh aspect, a network side device is provided. The network side device includes a processor and a memory. The memory stores a program or instructions capable of running on the processor. The program or the instructions implement steps of the method according to the second aspect when executed by the processor.

According to an eighth aspect, a network side device is provided, including a processor and a communication interface. The processor is configured to configure parameter configuration information corresponding to one or more serving cells. The communication interface is configured to send the parameter configuration information to a terminal. The parameter configuration information includes TAG identifiers, and the TAG identifiers are associated with respective transmission objects. The parameter configuration information is used for determining an uplink transmission time of a target transmission object corresponding to a target serving cell.

According to a ninth aspect, an uplink transmission time determination system is provided, including: a terminal and a network side device. The terminal may be configured to perform steps of the uplink transmission time determination method according to the first aspect, and the network side device may be configured to perform steps of the uplink transmission time determination method according to the second aspect.

According to a tenth aspect, a readable storage medium is provided. The readable storage medium stores a program or instructions. The program or the instructions, when executed by a processor, implement steps of the uplink transmission time determination method according to the first aspect, or implements steps of the uplink transmission time determination method according to the second aspect.

According to an eleventh aspect, a chip is provided. The chip includes a processor and a communication interface. The communication interface is coupled to the processor. The processor is configured to execute a program or instructions to implement the uplink transmission time determination method according to the first aspect or implement the uplink transmission time determination method according to the second aspect.

In a twelfth aspect, a computer program/a program product is provided. The computer program/the program product is stored in a storage medium. The computer program/the program product, when executed by at least one processor, implements steps of the uplink transmission time determination method according to the first aspect, or implements steps of the uplink transmission time determination method according to the second aspect.

In this embodiment of this application, parameter configuration information corresponding to one or more serving cells is received from a network side device. The parameter configuration information includes TAG identifiers, and the TAG identifiers are associated with respective transmission objects. A target transmission object corresponding to a target serving cell in which the terminal is located is determined in the transmission objects corresponding to the one or more serving cells according to the parameter configuration information. Further, an uplink transmission time of the target transmission object is determined according to a target TAG identifier associated with the target transmission object. It may be learned that in the technical solution, the network side device can pre-configure parameter configuration information corresponding to one or more serving cells and send the parameter configuration information to a terminal, so that the terminal can dynamically determine an uplink transmission time of a target transmission object according to a TAG identifier corresponding to a target serving cell in which the terminal is located, and not use the same uplink transmission time for all transmission objects. In addition, it can be ensured that uplink transmission times of a plurality of TRPs are accurate, thereby improving uplink transmission performance.

### BRIEF DESCRIPTION OF THE DRAWINGS

FIG. 1 is a block diagram of a wireless communication system according to an embodiment of this application;
FIG. 2 is a schematic diagram of an association relationship between a TAG and a cell according to an embodiment of this application;
FIG. 3 is a schematic flowchart of an uplink transmission time determination method according to an embodiment of this application;
FIG. 4(a) to FIG. 4(c) are schematic diagrams of an association relationship between a TAG and a transmission object according to an embodiment of this application;
FIG. 5 is a schematic flowchart of an uplink transmission time determination method according to another embodiment of this application;
FIG. 6 is a schematic flowchart of an uplink transmission time determination method according to still another embodiment of this application;
FIG. 7 is a schematic diagram of a terminal according to an embodiment of this application;
FIG. 8 is a schematic block diagram of a network side device according to an embodiment of this application;
FIG. 9 is a schematic block diagram of a communication device according to an embodiment of this application;
FIG. 10 is a schematic block diagram of a terminal according to an embodiment of this application; and
FIG. 11 is a schematic block diagram of a network side device according to another embodiment of this application.

### DETAILED DESCRIPTION

Technical solutions in embodiments of this application are clearly described below with reference to accompanying drawings in the embodiments of this application. Apparently, the described embodiments are merely some rather than all of the embodiments of this application. Based on the embodiments of this application, all other embodiments obtained by those of ordinary skill in the art fall within the scope of protection of this application.

Terms "first", "second", and the like in the specification and claims in the embodiments of this application are used for distinguishing similar objects instead of describing a specific order or sequence. It is to be understood that the terms used in this way are exchangeable in a proper case, so that the embodiments of this application can be implemented in a sequence other than sequences graphically shown or described here, and objects distinguished by "first" and "second" are usually of the same class without limiting a number of the objects, for example, a first object may be one or more. In addition, "and/or" in the specification and the claims represents at least one of the connected objects, and character "/" generally represents that contextual objects are in an "or" relationship.

It is worth noting that technologies described in this application are not limited to a long term evolution (Long Term Evolution, LTE)/evolution (LTE-Advanced, LTE-A) system of the LTE, and may alternatively be used for other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, and a single-carrier frequency division multiple access (Single-carrier Frequency Division Multiple Access, SC-FDMA), and other systems. Terms "system" and "network" in the embodiments of this application are often used interchangeably. The described technology can not only be used in the systems and radio technologies mentioned above, but also be used in other systems and radio technologies. The following description describes a new radio (New Radio, NR) system for a purpose of giving examples, and the term NR is used in most of the following descriptions. However, these technologies may alternatively be applied to applications other than an NR system application, for example, a 6^{th} generation (6^{th} Generation, 6G) communication system.

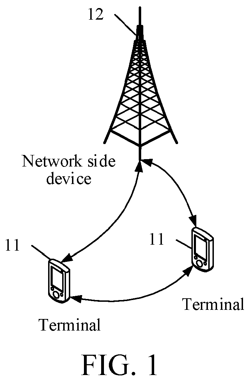

FIG. 1 is a block diagram of a wireless communication system to which the embodiments of this application are applicable. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home device (a home device with a wireless communication function, such as a refrigerator, a television, a washing machine, or furniture), a game console, a personal computer (personal computer, PC), an automatic teller machine, or a self-service machine. The wearable device includes: a smart watch, a smart bracelet, a smart headphone, smart glasses, smart jewelry (a smart wristlet, a smart bracelet, a smart ring, a smart necklace, a smart anklet, a smart ankle chain, and the like), a smart wristband, smart clothing, and the like. It is to be noted that, a specific type of the terminal 11 is not limited in this embodiment of this application. The network side device 12 may include an access network device or a core network device. The access network device may alternatively be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home eNB, a transmission reception point (Transmission Reception Point, TRP), or a suitable term in the field. As long as achieving the same technical effect, the base station is not limited to a specific technical word. It is to be noted that, the base station in the NR system is used only as an example for description in the embodiments of this application, but a specific type of the base station is not limited.

The uplink transmission time determination method according to the embodiments of this application is described in detail below through some embodiments and application scenarios thereof with reference to accompanying drawings.

First, a timing advance group (time advance group, TAG) is explained and described.

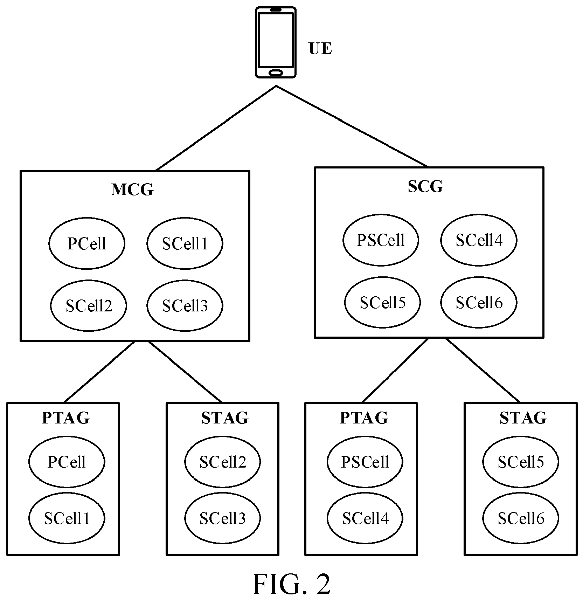

The TAG is applied to a carrier aggregation scenario. Delays introduced by a plurality of carriers are different, or locations of primary cells (Primary Cells, PCells) and secondary cells (Secondary Cells, SCells) of different carriers are greatly different. In this case, a unified TA cannot be used for processing. Therefore, a concept of TAG is introduced. The same TAG corresponds to the same TA, and different TAGs correspond to different TA values. FIG. 2 is a schematic diagram of an association relationship between a TAG and a cell according to an embodiment of this application. As shown in FIG. 2, a master cell group (Master Cell group, MCG) includes a primary cell PCell, a secondary cell SCell1, a secondary cell SCell2, and a secondary cell SCell3. A secondary cell group (Secondary Cell group, SCG) includes a primary secondary cell PSCell, a secondary cell SCell4, a secondary cell SCell5, and a secondary cell Scell6. A primary cell timing advance group (PCell TAG, PTAG) is a TAG including a primary cell, and a secondary cell timing advance group (SCell TAG, STAG) is a TAG including a secondary cell. In the association relationship shown in FIG. 2, in the MCG, the PTAG is associated with the primary cell Pcell and the secondary cell SCell1, and the STAG is associated with the secondary cell SCell2 and the secondary cell SCell3. In the SCG, the PTAG is associated with the primary secondary cell PScell and the secondary cell Scell4, and the STAG is associated with the secondary cell Scell5 and the secondary cell Scell6.

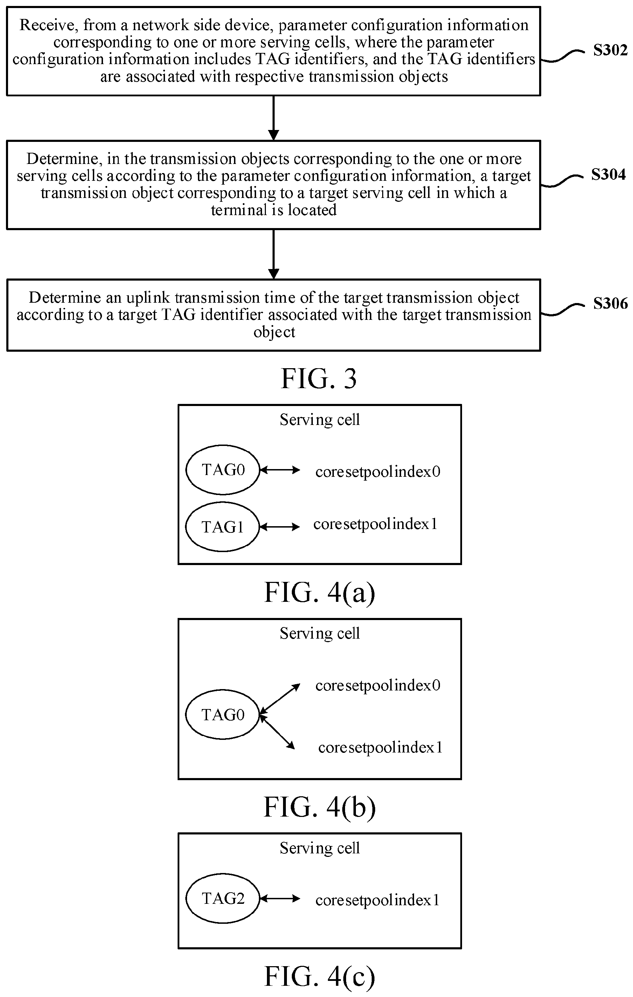

FIG. 3 is a schematic flowchart of an uplink transmission time determination method according to an embodiment of this application. As shown in FIG. 3, the method is applied to a terminal, and includes the following steps S302 to S306.

S302: Receive, from a network side device, parameter configuration information corresponding to one or more serving cells. The parameter configuration information includes TAG identifiers, and the TAG identifiers are associated with respective transmission objects.

Each serving cell is configured with one or more TRPs.

Each TAG identifier is associated with one or more transmission objects sent to the TRP. The association relationship between the TAG identifier and the transmission object may be determined in the following several manners. One manner: in the parameter configuration information corresponding to each serving cell, each TAG identifier is associated with one or more transmission objects sent to the TRP. Another manner: the parameter configuration information corresponding to the serving cell only includes TAG identifiers, and the network side device configures a transmission object associated with each TAG identifier by using other configuration information, where configuration information of the other configuration information is not limited. Still another manner: the parameter configuration information corresponding to the serving cell only includes TAG identifiers, and a transmission object associated with each TAG identifier is agreed in a communication protocol between the network side device and the terminal. Certainly, in addition to the several manners listed above, the association relationship between the TAG identifier and the transmission object may alternatively be clarified in another manner. This is not limited in this embodiment of this application.

Optionally, the transmission object may include at least one of the following: a control resource set pool index (for example, coresetpoolindex0 or coresetpoolindex1), a sounding reference signal (Sounding Reference Signal, SRS) resource set, a transmission configuration indicator (Transmission Configuration Indicator, TCI) state, a TCI state pool, a synchronization signaling block (Synchronization Signaling Block, SSB) group, a physical cell identifier (Physical Cell ID, PCI), and an antenna port group.

Optionally, for the parameter configuration information of each serving cell, the following several cases may be included: the parameter configuration information includes two TAG identifiers, and each TAG identifier is associated with an uplink transmission object; or the parameter configuration information includes a TAG identifier, and the TAG identifier is associated with two transmission objects; or the parameter configuration information includes a TAG identifier, and the TAG identifier is associated with a transmission object.

If an association relationship between the TAG identifier and the transmission object is configured in the parameter configuration information configured by the network side device, for the parameter configuration information of each serving cell, the association relationship between the TAG identifier and the transmission object may include any one of the following a1 to a3.

a1, the parameter configuration information includes two TAG identifiers and two transmission objects, and each TAG identifier is associated with an uplink transmission object.

As shown in FIG. 4 (a), parameter configuration information of a serving cell includes two TAG identifiers, that is, TAGO and TAG1. Each TAG identifier is associated with a transmission object, where TAGO is associated with coresetpoolindex0, and TAG1 is associated with coresetpoolindex1.

a2, the parameter configuration information includes one TAG identifier and two transmission objects associated with the TAG identifier.

As shown in FIG. 4 (b), parameter configuration information of a serving cell includes one TAG identifier, that is, TAGO, and TAGO is associated with two transmission objects, which are respectively coresetpoolindex0 and coresetpoolindex1.

a3, the parameter configuration information includes one TAG identifier and one transmission object associated with the TAG identifier.

As shown in FIG. 4 (c), parameter configuration information of a serving cell includes one TAG identifier, that is, TAG2, and TAG2 is only associated with one transmission object, that is, coresetpoolindex1.

Optionally, a plurality of serving cells are configured with the same TAG identifier, and the same TAG identifier is associated with the same transmission object. For example, it may be learned from FIG. 4 (a) to FIG. 4 (c) that, the transmission objects associated with TAGO all include coresetpoolindex0.

S304: Determine, in the transmission objects corresponding to the one or more serving cells according to the parameter configuration information, a target transmission object corresponding to a target serving cell in which a terminal is located.

As described above, the target transmission object corresponding to the target serving cell may include one or more target transmission objects. After the target transmission object corresponding to the target serving cell is determined, an uplink transmission time of the target transmission object is determined for each target transmission object.

S306: Determine an uplink transmission time of the target transmission object according to a target TAG identifier associated with the target transmission object.

In this embodiment of this application, parameter configuration information corresponding to one or more serving cells is received from a network side device. The parameter configuration information includes TAG identifiers, and the TAG identifiers are associated with respective transmission objects. A target transmission object corresponding to a target serving cell in which the terminal is located is determined in the transmission objects corresponding to the one or more serving cells according to the parameter configuration information. Further, an uplink transmission time of the target transmission object is determined according to a target TAG identifier associated with the target transmission object. It may be learned that in the technical solution, the network side device can pre-configure parameter configuration information corresponding to one or more serving cells and send the parameter configuration information to a terminal, so that the terminal can dynamically determine an uplink transmission time of a target transmission object according to a TAG identifier corresponding to a target serving cell in which the terminal is located, and not use the same uplink transmission time for all transmission objects. In addition, it can be ensured that uplink transmission times of a plurality of TRPs are accurate, thereby improving uplink transmission performance.

In an embodiment, each TAG identifier is associated with one downlink frame time. When the uplink transmission time of the target transmission object is determined according to the target TAG identifier associated with the target transmission object, the following steps A1 to A3 may be performed.

Step A1: Determine an uplink time adjustment amount corresponding to a target TAG identifier.

Step A2: Determine an uplink reference time corresponding to the target TAG identifier according to a downlink frame time corresponding to the target TAG identifier.

An execution order of A1 and A2 is not limited. For example, in addition to the order of first determining the uplink time adjustment amount and then determining the uplink reference time shown in this embodiment, the uplink reference time may be first determined and then the uplink time adjustment amount may be determined. Alternatively, the uplink reference time and the uplink time adjustment amount may be simultaneously determined.

Step A3: Determine the uplink transmission time of the target transmission object according to the uplink reference time and the uplink time adjustment amount.

The following describes how to determine the uplink reference time and the uplink time adjustment amount corresponding to the target TAG identifier in detail.

In an embodiment, when step A2 is determined, that is, when the uplink reference time is determined, a reference cell is first determined in a first serving cell according to the target TAG identifier. Then, the downlink frame time of the transmission object corresponding to the reference cell is determined as the uplink reference time corresponding to the target TAG identifier. The target TAG indicated by the target TAG identifier corresponds to a plurality of first serving cells. In this way, it can be ensured that an accurate uplink reference time corresponding to the target transmission object is determined for the TAG corresponding to the TAG identifier.

Optionally, the first serving cell which is configured with two TAG identifiers, each of which is associated with one transmission object, as the reference cell. Alternatively, the first serving cell configured with only one TAG identifier is determined as the reference cell. In this way, the terminal only needs to measure the downlink time corresponding to the serving cell (that is, the reference cell) as the uplink reference time, and does not need to determine the uplink reference time after distinguishing the target object, thereby reducing implementation complexity of the terminal.

Optionally, when the first serving cell configured with two TAG identifiers, each of which is associated with one transmission object, is determined as the reference cell, the downlink frame time of the transmission object corresponding to the first serving cell (or the reference cell) is obtained based on measurement of a downlink (Downlink, DL) reference signal or a DL channel of the transmission object corresponding to the first serving cell.

The DL reference signal or the downlink channel of the transmission object corresponding to the first serving cell may be configured or indicated by a network side device. Based on this, the terminal may determine, based on configuration information or indication information of the network side device, the DL reference signal or the DL channel of the transmission object corresponding to the first serving cell. Optionally, the terminal receives radio resource control (Radio Resource Control, RRC) configuration information sent by the network side device. The RRC configuration information carries information of the DL reference signal or the DL channel of the transmission object corresponding to each serving cell. The terminal may determine, according to the RRC configuration information, the DL reference signal or the DL channel of the transmission object corresponding to the first serving cell.

In an embodiment, under an Intra-cell mTRP configuration, a plurality of TRPs is configured in a serving cell. If a plurality of TRPs are configured in a target serving cell in which the terminal is located, the target serving cell is a primary cell configured with two TAG identifiers. In this case, a TAG corresponding to each of the two TAG identifiers configured for the target serving cell is configured as a first-type TAG, or a TAG corresponding to one of the two TAG identifiers is configured as the first-type TAG. The first-type TAG may be a PTAG, that is, a TAG including the primary cell.

Optionally, in a case that the TAG corresponding to each of the two TAG identifiers corresponding to the target serving cell is configured as the first-type TAG, uplink transmission of the transmission object associated with the first-type TAG is released if the first-type TAG is out of synchronization. In a case that the TAG corresponding to one of the TAG identifiers is configured as the first-type TAG, all uplink transmission corresponding to the terminal is released if the first-type TAG is out of synchronization.

In this embodiment, each TAG is configured with one time alignment timer (Time Alignment Timer, TAT) for controlling synchronization duration of a serving cell in the TAG. The TAT will be started when the terminal receives a TAC, and the terminal cannot perform uplink transmission when the TAT expires. In this embodiment, "out of synchronization" may be understood as that a corresponding TAT expires. The first-type TAG is out of synchronization, that is, a TAT corresponding to the first-type TAG expires.

Optionally, in the two TAG identifiers corresponding to the target serving cell, the TAG corresponding to the TAG identifier associated with the transmission object coresetpoolindex 0 is the first-type TAG.

Optionally, the network side device may configure the first-type TAG, and the terminal may determine a TAG corresponding to which of the two TAG identifiers is the first-type TAG according to configuration information of the network side device. Based on this, the terminal may receive the RRC configuration information sent by the network side device. The RRC configuration information carries TAG identifier information corresponding to the first-type TAG. The terminal may determine, according to the RRC configuration information sent by the network side device, that the TAG corresponding to one of the two TAG identifiers is the first-type TAG.

In an embodiment, under an Intra-cell mTRP, a plurality of transmission objects are configured between serving cells. The target serving cell in which the terminal is located is a primary cell configured with two TAG identifiers. In this case, the terminal may determine that a TAG corresponding to a TAG identifier associated with a target transmission object (that is, a transmission object corresponding to a target serving cell in which the terminal is located) is a first-type TAG, and the first-type TAG is the TAG including the primary cell. The transmission object of the target serving cell is not associated with a PCI identifier.

Optionally, all uplink transmission corresponding to the terminal is released if the first-type TAG is out of synchronization. The first-type TAG is out of synchronization, that is, a TAT corresponding to the first-type TAG expires.

In an embodiment, when the terminal determines the uplink time adjustment amount corresponding to the target TAG identifier, following steps B1 to B3 may be performed.

Step B1: Receive a physical downlink control channel (Physical Downlink Control Channel, PDCCH) associated with a target transmission object, where the PDCCH carries an object identifier of the target transmission object and/or a target TAG identifier associated with the target transmission object.

After the terminal receives the PDCCH, a random access channel (Random Access Channel, RACH) process is triggered, so that an uplink time adjustment amount configured by a terminal side device is received in the RACH process.

Step B2: Send, based on the PDCCH, first information corresponding to the target transmission object to a network side device. The first information is used for determining an uplink time adjustment amount corresponding to the target transmission object.

Optionally, the network side device determines, based on the first information, an uplink time adjustment amount corresponding to the target transmission object, carries the uplink time adjustment amount in a random access response (Random Access Response, RAR), and sends the RAR to the terminal.

The first information may be a random signal preamble. The network side device may determine the uplink time adjustment amount by measuring the preamble. It is to be noted that, the first information sent by the terminal to the network side device is not limited to the preamble, and may alternatively be any other type of information. Theoretically, any signal sent by the terminal may be used for measuring the uplink time adjustment amount, for example, a sounding reference signal (Sounding Reference Signal, SRS), a demodulation reference signal (Demodulation Reference Signal, DM-RS), a channel quality indicator (Channel Quality Indicator, CQI), an acknowledgement (Acknowledgement, ACK), a negative acknowledgement (Negative Acknowledgement, NACK), and a physical uplink shared channel (Physical Uplink Shared Channel, PDCCH).

Step B3: Receive an RAR sent by the network side device, and determine an uplink time adjustment amount based on an RAR.

In an embodiment, a quasi co-location (Quasi Co-Location, QCL) relationship corresponding to the PDCCH is determined based on a QCL relationship of a type1 common search space (Common Search Space, CSS), or is determined based on a PDCCH associated with the same transmission object as the type1CSS.

In an embodiment, under a first condition, the QCL relationship of the PDCCH is determined based on the QCL relationship of the type1CSS corresponding to the PDCCH. The first condition includes: the PDCCH is from a second serving cell not belonging to the primary cell, or the PDCCH is from a third serving cell corresponding to an associated PCI of the primary cell.

In an embodiment, if the target serving cell corresponds to two target transmission objects and uplink transmission times of the two target transmission objects overlap with each other, the terminal discards uplink transmission of a first transmission object of the two target transmission objects.

The uplink transmission of the first transmission object may include at least one of the following: uplink transmission associated with a specific control resource set pool index (for example, coresetpoolindex0) and uplink transmission associated with a relatively late uplink transmission time.

In an embodiment, before discarding the uplink transmission of the first transmission object of the two target transmission objects, the terminal may report to the network side device that the terminal has a discarding capability for the uplink transmission of the first transmission object.

If the terminal does not report the discarding capability for the uplink transmission of the first transmission object, the network side device may ensure, through network scheduling, that uplink transmission associated with different TAG identifiers cannot overlap with each other. Optionally, the network side device ensures, through network scheduling, a particular time interval between uplink transmission associated with different TAG identifiers. For example, an interval between uplink transmission associated with different TAG identifiers is greater than or equal to a preset threshold. The preset threshold may be reported to the network side device by the terminal, or may be configured in an RRC by the network side device, or may be predefined based on a protocol between the terminal and the network side device.

In this embodiment, if the target serving cell corresponds to two target transmission objects, an interval between uplink transmission of the two target transmission objects is greater than or equal to a preset threshold. The preset threshold may be reported to the network side device by the terminal, or may be configured in an RRC by the network side device, or may be predefined based on a protocol between the terminal and the network side device.

The following Table 1 schematically lists preset thresholds at several sub-carrier intervals.

**Table 1**

| Sub-carrier interval | Preset threshold |
|---|---|
| 0 | 5 |
| 1 | 10 |
| 2 | 20 for FR1; 4 for FR2 |
| 3 | 8 |

FR1 (Frequency range 1) and FR2 (Frequency range2) represent two frequency ranges stipulated by 5G new radio (New Radio, NR).

Optionally, the preset threshold may be an orthogonal frequency division multiplex (Orthogonal Frequency Division Multiplex, OFDM) symbol.

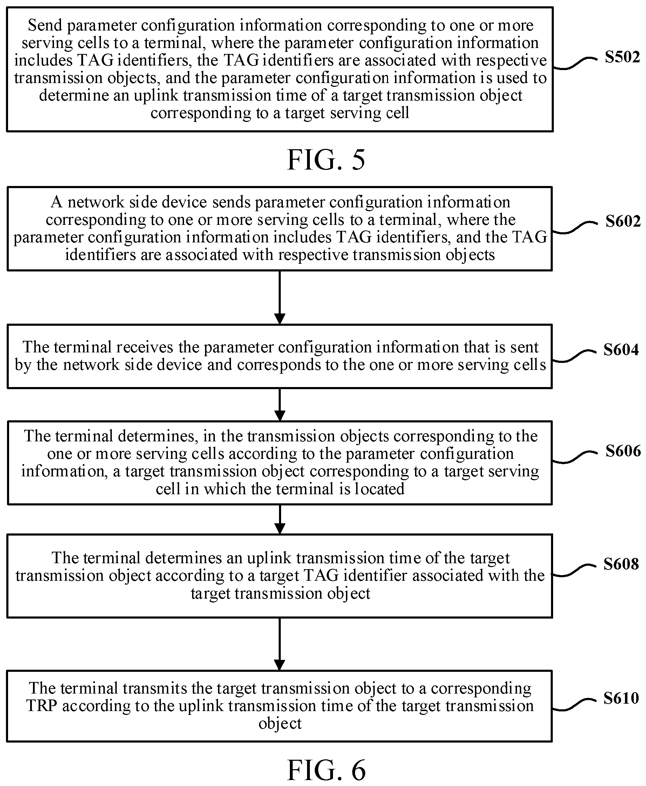

FIG. 5 is a schematic flowchart of an uplink transmission time determination method according to another embodiment of this application. As shown in FIG. 5, the method is applied to a network side device, and includes the following step S502.

S502: Send parameter configuration information corresponding to one or more serving cells to a terminal, where the parameter configuration information includes TAG identifiers, the TAG identifiers are associated with respective transmission objects, and the parameter configuration information is used for determining an uplink transmission time of a target transmission object corresponding to a target serving cell.

Each TAG identifier is associated with one or more transmission objects sent to a TRP. The association relationship between the TAG identifier and the transmission object may be determined in the following several manners. One manner: in the parameter configuration information corresponding to each serving cell, each TAG identifier is associated with one or more transmission objects sent to the TRP. Another manner: the parameter configuration information corresponding to the serving cell only includes TAG identifiers, and the network side device configures a transmission object associated with each TAG identifier by using other configuration information, where configuration information of the other configuration information is not limited. Still another manner: the parameter configuration information corresponding to the serving cell only includes TAG identifiers, and a transmission object associated with each TAG identifier is agreed in a communication protocol between the network side device and the terminal. Certainly, in addition to the several manners listed above, the association relationship between the TAG identifier and the transmission object may alternatively be clarified in another manner. This is not limited in this embodiment of this application.

In this embodiment of this application, the network side device pre-configures the parameter configuration information corresponding to one or more serving cells, and sends the parameter configuration information corresponding to the one or more serving cells to the terminal. The parameter configuration information includes TAG identifiers, and the TAG identifiers are associated with respective transmission objects, so that the terminal can dynamically determine an uplink transmission time of a target transmission object according to a TAG identifier corresponding to a target serving cell in which the terminal is located, and not use the same uplink transmission time for all transmission objects. In addition, it can be ensured that the uplink transmission times of a plurality of TRPs are accurate, thereby improving uplink transmission performance.

In an embodiment, the transmission object includes at least one of the following: a resource set pool index (for example, coresetpoolindex 0 or coresetpoolindex 1), an SRS resource set, a TCI state, a TCI state pool, an SSB group, a PCI, or an antenna port group.

In an embodiment, for the parameter configuration information of each serving cell, the following several cases may be included: the parameter configuration information includes two TAG identifiers, and each TAG identifier is associated with an uplink transmission object; or the parameter configuration information includes a TAG identifier, and the TAG identifier is associated with two transmission objects; or the parameter configuration information includes a TAG identifier, and the TAG identifier is associated with a transmission object.

If an association relationship between the TAG identifier and the transmission object is configured in the parameter configuration information configured by the network side device, for the parameter configuration information of each serving cell, the association relationship between the TAG identifier and the transmission object may include any one of the following a1 to a3.

a1, the parameter configuration information includes two TAG identifiers and two transmission objects, and each TAG identifier is associated with an uplink transmission object.

As shown in FIG. 4 (a), parameter configuration information of a serving cell includes two TAG identifiers, that is, TAGO and TAG1. Each TAG identifier is associated with a transmission object, where TAGO is associated with coresetpoolindex0, and TAG1 is associated with coresetpoolindex1.

a2, the parameter configuration information includes one TAG identifier and two transmission objects associated with the TAG identifier.

As shown in FIG. 4 (b), parameter configuration information of a serving cell includes one TAG identifier, that is, TAGO, and TAGO is associated with two transmission objects, which are respectively coresetpoolindex0 and coresetpoolindex1.

a3, the parameter configuration information includes one TAG identifier and one transmission object associated with the TAG identifier.

In an embodiment, a plurality of serving cells are configured with the same TAG identifier, and the same TAG identifier is associated with the same transmission object.

In an embodiment, each TAG identifier is associated with one downlink frame time.

In an embodiment, for a serving cell configured with two TAG identifiers, the network side device indicates a TAG corresponding to one of the two TAG identifiers as a first-type TAG. The first-type TAG is a TAG including a primary cell.

In an embodiment, when the network side device indicates that the TAG corresponding to one of the two TAG identifiers is the first-type TAG, if the transmission object is coresetpoolindex 0, the TAG corresponding to the TAG identifier associated with the transmission object is indicated as the first-type TAG.

In an embodiment, the network-side device sends RRC configuration information to the terminal. The RRC configuration information carries at least one piece of the following information: a DL reference signal or a DL channel of the transmission object corresponding to each serving cell; indication information of the first-type TAG (that is, indicating the TAG corresponding to which TAG identifier as the first-type TAG); and a minimum threshold of an interval between uplink transmission of two transmission objects corresponding to the same serving cell, that is, ensuring that the uplink transmission of the two transmission objects corresponding to the same serving cell cannot overlap with each other.

In an embodiment, the network side device configures an associated uplink time adjustment amount for each TAG identifier. Specifically, first, the network side device sends a PDCCH associated with a target transmission object to the terminal. The PDCCH carries an object identifier of the target transmission object and/or a target TAG identifier associated with the target transmission object. Then, the network side device receives first information that is sent by the terminal and that corresponds to the target transmission object, determines the uplink time adjustment amount corresponding to the target transmission object according to the first information, and carries the uplink time adjustment amount to an RAR to send to the terminal.

The first information may be a preamble. The network side device may determine the uplink time adjustment amount by measuring the preamble. It is to be noted that, the first information sent by the terminal to the network side device is not limited to the preamble, and may alternatively be any other type of information. Theoretically, any signal sent by the terminal may be used for measuring the uplink time adjustment amount, for example, an SRS, a DM-RS, a CQI, an ACK, a NACK, or a PUSCH.

In an embodiment, the network side device receives a capability reported by the terminal. The capability includes: in a case that the serving cell corresponds to two transmission objects and uplink transmission times of the two transmission objects overlap with each other, a discarding capability for uplink transmission of a first transmission object, where the uplink transmission of the first transmission object is uplink transmission satisfying a discarding condition, the discarding condition includes at least one of the following: associating a specific control resource set pool index (for example, coresetpoolindex 0), and a relatively late uplink transmission time.

FIG. 6 is a schematic flowchart of an uplink transmission time determination method according to still another embodiment of this application; As shown in FIG. 6, the method is applied to an uplink transmission time determination system. The system includes a terminal and a network side device. The method includes the following steps S602 to S610.

S602: A network side device sends parameter configuration information corresponding to one or more serving cells to a terminal, where the parameter configuration information includes TAG identifiers, and the TAG identifiers are associated with respective transmission objects.

An association relationship between the TAG identifier and the transmission object and a clarification manner are described in detail in the foregoing embodiments, and details are not described herein again.

S604: The terminal receives the parameter configuration information that is sent by the network side device and corresponds to the one or more serving cells.

S606: The terminal determines, in the transmission objects corresponding to the one or more serving cells according to the parameter configuration information, a target transmission object corresponding to a target serving cell in which the terminal is located.

S608: The terminal determines an uplink transmission time of the target transmission object according to a target TAG identifier associated with the target transmission object.

A determination manner for the uplink transmission time has been described in detail in the foregoing embodiments, and details are not described again herein.

S610: The terminal transmits the target transmission object to a corresponding TRP according to the uplink transmission time of the target transmission object.

In this embodiment of this application, the network side device pre-configures parameter configuration information corresponding to one or more serving cells and sends the parameter configuration information to the terminal. The terminal receives the parameter configuration information corresponding to the one or more serving cells, and determines, according to the parameter configuration information, a TAG identifier corresponding to a target serving cell in which the terminal is located, so as to dynamically determine an uplink transmission time of a target transmission object according to the TAG identifier corresponding to the target serving cell, and not use the same uplink transmission time for all transmission objects. In addition, it can be ensured that the uplink transmission times of a plurality of TRPs are accurate, thereby improving uplink transmission performance.

The uplink transmission time determination method according to this embodiment of this application may be performed by a terminal. In this embodiment of this application, the terminal according to this embodiment of this application is described by using an example in which the terminal performs the uplink transmission time determination method.

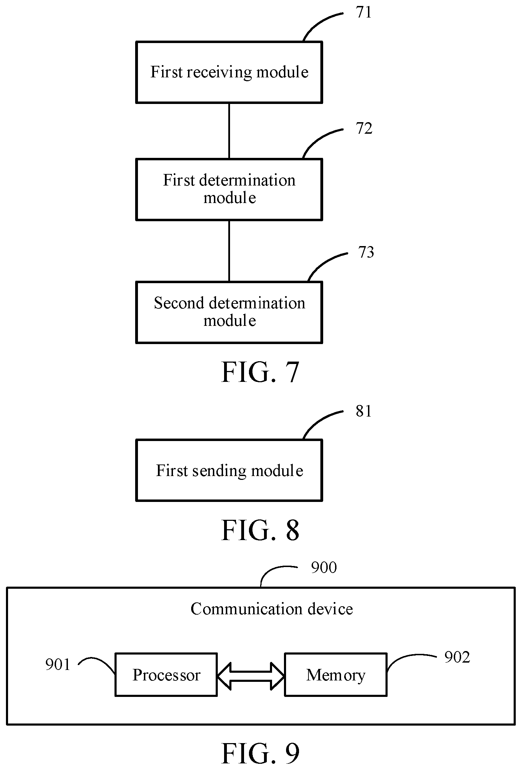

FIG. 7 is a schematic diagram of a terminal according to an embodiment of this application. As shown in FIG. 7, the terminal includes:
a first receiving module 71, configured to receive, from a network side device, parameter configuration information corresponding to one or more serving cells, where the parameter configuration information includes timing advance group TAG identifiers, and the TAG identifiers are associated with respective transmission objects;
a first determination module 72, configured to determine, in the transmission objects corresponding to the one or more serving cells according to the parameter configuration information, a target transmission object corresponding to a target serving cell in which the terminal is located; and
a second determination module 73, configured to determine an uplink transmission time of the target transmission object according to a target TAG identifier associated with the target transmission object.

In some embodiments, the transmission object includes at least one of the following: a control resource set pool index, a sounding reference signal SRS resource set, a transmission configuration indicator TCI state, a TCI state pool, a synchronization signal block SSB group, and a physical cell identifier PCI.

In an embodiment, the parameter configuration information includes two TAG identifiers, and each TAG identifier is associated with one uplink transmission object; or,
the parameter configuration information includes one TAG identifier, and the TAG identifier is associated with two transmission objects; or,
the parameter configuration information includes one TAG identifier, and the TAG identifier is associated with one transmission object.

In an embodiment, the plurality of serving cells are configured with the same TAG identifier, and the same TAG identifier is associated with the same transmission object.

In an embodiment, each TAG identifier is associated with one downlink frame time.

The second determination module 73 includes:
a first determination unit, configured to determine, according to the downlink frame time corresponding to the target TAG identifier, an uplink reference time corresponding to the target TAG identifier;
a second determination unit, configured to determine an uplink time adjustment amount corresponding to the target TAG identifier; and
a third determination unit, configured to determine the uplink transmission time of the target transmission object according to the uplink reference time and the uplink time adjustment amount.

In an embodiment, the first determination unit is further configured to:
determine a reference cell in a first serving cell according to the target TAG identifier, where the target TAG indicated by the target TAG identifier corresponds to a plurality of first serving cells; and
determine the downlink frame time of the transmission object corresponding to the reference cell as the uplink reference time corresponding to the target TAG identifier.

In an embodiment, the first determination unit is further configured to:
determine the first serving cell configured with two TAG identifiers, each of which is associated with one transmission object, as the reference cell;
   or,
determine the first serving cell configured with only one TAG identifier as the reference cell.

In an embodiment, a plurality of transmission objects are configured in the target serving cell; and the target serving cell is a primary cell configured with two TAG identifiers, where
a TAG corresponding to each of the two TAG identifiers is configured as a first-type TAG, or a TAG corresponding to one of the two TAG identifiers is configured as the first-type TAG; and the first-type TAG is the TAG including the primary cell.

In an embodiment, the TAG corresponding to each of the two TAG identifiers corresponding to the target serving cell is the first-type TAG. The terminal further includes:
a first release module, configured to release, if one first-type TAG is out of synchronization, uplink transmission of the transmission object associated with the one first-type TAG.

In an embodiment, the TAG corresponding to one of the two TAG identifiers corresponding to the target serving cell is configured as the first-type TAG. The terminal further includes:
a second release module, configured to release, if the first-type TAG is out of synchronization, all uplink transmission corresponding to the terminal.

In an embodiment, the terminal further includes:
a fourth determination module, configured to determine, according to the RRC configuration information sent by the network side device, the TAG corresponding to one of the two TAG identifiers as the first-type TAG.

In an embodiment, a plurality of TRPs are configured between the serving cells; and the target serving cell is a primary cell configured with two TAG identifiers.

The terminal further includes:
a fifth determination module, configured to determine a TAG corresponding to the TAG identifier associated with the target transmission object as a first-type TAG; and the first-type TAG is the TAG including the primary cell.

In an embodiment, the terminal further includes:
a third release module, configured to release, if the first-type TAG is out of synchronization, all uplink transmission corresponding to the terminal.

In an optional embodiment, the first determination unit is further configured to:
receive a physical downlink control channel PDCCH associated with the target transmission object, where the PDCCH carries an object identifier of the target transmission object and/or the target TAG identifier;
send, based on the PDCCH, the first information corresponding to the target transmission object to the network side device, where the first information is used for determining the uplink time adjustment amount corresponding to the target transmission object; and
receive a random access response RAR sent by the network side device, where the RAR carries the uplink time adjustment amount.

In an embodiment, a quasi co-location QCL relationship of the PDCCH is determined based on a QCL relationship of type1 common search space CSS corresponding to the PDCCH, or is determined based on a PDCCH associated with the same transmission object as the type1CSS.

In an embodiment, under a first condition, the QCL relationship of the PDCCH is determined based on the QCL relationship of the type1CSS corresponding to the PDCCH.

The first condition includes: the PDCCH is from a second serving cell not belonging to the primary cell, or the PDCCH is from a third serving cell corresponding to an associated PCI of the primary cell.

In an embodiment, the terminal further includes:
discarding, if the target serving cell corresponds to two target transmission objects and uplink transmission times of the two target transmission objects overlap with each other, uplink transmission of a first transmission object of the two target transmission objects.

In an embodiment, the uplink transmission of the first transmission object includes at least one of the following:
uplink transmission associated with a specific control resource set pool index; and
uplink transmission with a relatively late uplink transmission time.

In an embodiment, the terminal further includes:
a reporting module, configured to report to the network side device that the terminal has a discarding capability for the uplink transmission of the first transmission object before discarding the uplink transmission of the first transmission object of the two target transmission objects.

In an embodiment, if the target serving cell corresponds to two target transmission objects, an interval between uplink transmission of the two target transmission objects is greater than or equal to a preset threshold.

The preset threshold is reported by the terminal to the network side device, or the preset threshold is configured by an RRC, or the preset threshold is predefined based on a protocol between the terminal and the network side device.

In this embodiment of this application, parameter configuration information corresponding to one or more serving cells is received from a network side device. The parameter configuration information includes TAG identifiers, and the TAG identifiers are associated with respective transmission objects. A target transmission object corresponding to a target serving cell in which the terminal is located is determined in the transmission objects corresponding to the one or more serving cells according to the parameter configuration information. Further, an uplink transmission time of the target transmission object is determined according to a target TAG identifier associated with the target transmission object. It may be learned that in the technical solution, the network side device can pre-configure parameter configuration information corresponding to one or more serving cells and send the parameter configuration information to a terminal, so that the terminal can dynamically determine an uplink transmission time of a target transmission object according to a TAG identifier corresponding to a target serving cell in which the terminal is located, and not use the same uplink transmission time for all transmission objects. In addition, it can be ensured that uplink transmission times of a plurality of TRPs are accurate, thereby improving uplink transmission performance.

The terminal in the embodiments of this application may be an electronic device, for example, an electronic device having an operating system, or may be a component in the electronic device, for example, an integrated circuit or a chip. The electronic device may be a terminal, or may be another device other than a terminal. For example, the terminal may include but is not limited to the aforementioned types of terminals, and the another device may be a server, a network attached storage (Network Attached Storage, NAS), or the like. This is not specifically limited in the embodiments of this application.

The terminal provided by embodiments of this application can implement various processes implemented by the method embodiment of FIG. 3, and the same technical effects can be achieved. To avoid repetition, details are not described herein again.

FIG. 8 is a schematic block diagram of a network side device according to an embodiment of this application. As shown in FIG. 8, the network side device includes:
a first sending module 81, configured to send parameter configuration information corresponding to one or more serving cells. The parameter configuration information includes TAG identifiers, and the TAG identifiers are associated with respective transmission objects. The parameter configuration information is used for determining an uplink transmission time of a target transmission object corresponding to a target serving cell.

In some embodiments, the transmission object includes at least one of the following: a resource set pool index, an SRS resource set, a TCI state, a TCI state pool, an SSB group, and a PCI.

In an embodiment, the parameter configuration information includes two TAG identifiers, and each TAG identifier is associated with one uplink transmission object; or,
the parameter configuration information includes one TAG identifier, and the TAG identifier is associated with two transmission objects; or,
the parameter configuration information includes one TAG identifier, and the TAG identifier is associated with one transmission object.

In an embodiment, the plurality of serving cells are configured with the same TAG identifier, and the same TAG identifier is associated with the same transmission object.

In an embodiment, each TAG identifier is associated with one downlink frame time.

In an embodiment, the network side device further includes:
an indicating module, configured to indicate, for the serving cell configured with two TAG identifiers, a TAG corresponding to one of the two TAG identifiers as a first-type TAG; and the first-type TAG is the TAG including the primary cell.

In an embodiment, the network side device further includes:
a second sending module, configured to send RRC configuration information to the terminal, where
the RRC configuration information carries at least one of the following:
   a DL reference signal or a DL channel of the transmission object corresponding to each serving cell;
   indication information of the first-type TAG; and
   a minimum threshold of an interval between uplink transmission of two transmission objects corresponding to the same serving cell.

In an embodiment, the network side device further includes:
a third sending module, configured to send a PDCCH associated with the target transmission object to the terminal, where the PDCCH carries an object identifier of the target transmission object and/or a target TAG identifier associated with the target transmission object;
a second receiving module, configured to receive first information that is sent by the terminal and that corresponds to the target transmission object; and
a sixth determination module, configured to determine, according to the first information, an uplink time adjustment amount corresponding to the target transmission object, carry the uplink time adjustment amount in an RAR, and send the RAR to the terminal.

In an embodiment, the network side device further includes:
a third receiving module, configured to receive a reporting capability of the terminal. The capability includes: in a case that the serving cell corresponds to two transmission objects and uplink transmission times of the two objects overlap with each other, a discarding capability for uplink transmission of a first transmission object. The uplink transmission of the first transmission object is uplink transmission satisfying a discarding condition, where
the discarding condition includes at least one of the following: associating a specific control resource set pool index, and a relatively late uplink transmission time.

In this embodiment of this application, the network side device pre-configures the parameter configuration information corresponding to one or more serving cells, and sends the parameter configuration information corresponding to the one or more serving cells to the terminal. The parameter configuration information includes TAG identifiers, and the TAG identifiers are associated with respective transmission objects, so that the terminal can dynamically determine an uplink transmission time of a target transmission object according to a TAG identifier corresponding to a target serving cell in which the terminal is located, and not use the same uplink transmission time for all transmission objects. In addition, it can be ensured that the uplink transmission times of a plurality of TRPs are accurate, thereby improving uplink transmission performance.

The network side device in the embodiments of this application may be an electronic device, for example, an electronic device with an operating system, or a component such as an integrated circuit or a chip in the electronic device. The electronic device may be a network-side device or any other device except a terminal. For example, the network side device may include, but is not limited to, types of the network side devices listed above. The another device may be a server, a network attached storage (Network Attached Storage, NAS), or the like. This is not specifically limited in the embodiments of this application.

The network side device according to the embodiments of this application can implement various processes implemented by the method embodiment of FIG. 5, and the same technical effects can be achieved. To avoid repetition, details are not described herein again.

Optionally, as shown in FIG. 9, an embodiment of this application further provides a communication device 900, including a processor 901 and a memory 902. The memory 902 stores a program or instructions executable on the processor 901, for example, when the communication device 900 is a terminal, the program or instructions implement, when executed by the processor 901, various steps of the foregoing uplink transmission time determination method, and the same technical effects can be achieved. When the communication device 900 is a network side device, the program or instructions implement, when executed by the processor 901, various steps of the foregoing uplink transmission time determination method, and the same technical effects can be achieved. To avoid repetition, details are not described herein again.

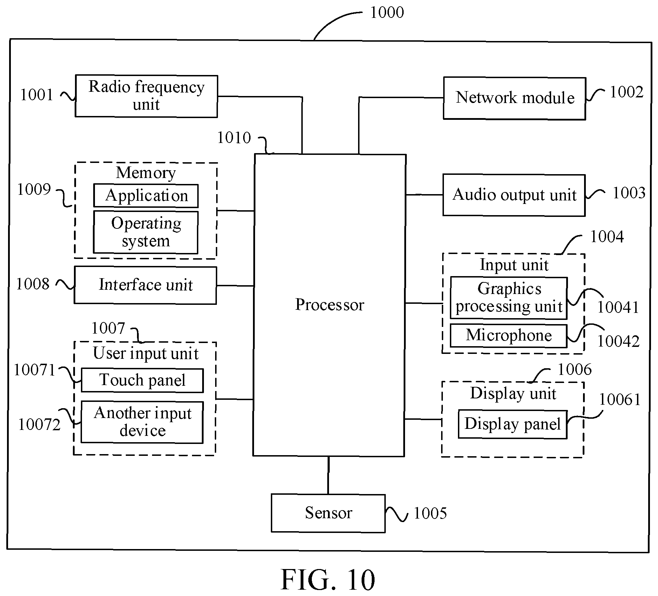

An embodiment of this application further provides a terminal. The terminal includes a processor and a communication interface. The communication interface is configured to send parameter configuration information that is sent by the network side device and that corresponds to one or more serving cells. The parameter configuration information includes a timing advance group TAG identifier and a transmission object that are associated with each other. The processor is configured to determine, according to the parameter configuration information, a target transmission object corresponding to a target serving cell in which the terminal is located, and to determine an uplink transmission time of the target transmission object according to a target TAG identifier associated with the target transmission object. This terminal embodiment corresponds to the above-mentioned terminal side method embodiment. Various implementation processes and implementations of the above-mentioned method embodiment are applicable to the terminal embodiment, and the same technical effects can be achieved. Specifically, FIG. 10 is a schematic diagram of a hardware structure for implementing a terminal according to an embodiment of this application.

The terminal 1000 includes, but is not limited to: at least part components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Those skilled in the art may understand that the terminal 1000 may further include a power supply (for example, a battery) for supplying power to various components. The power supply may be logically connected to the processor 1010 through a power management system, thereby realizing functions such as charging management, discharging management, and power consumption management through the power management system. A terminal structure shown in FIG. 10 does not constitute a limitation to the terminal. The terminal may include more or fewer components than those shown in the figure, or combine some components, or have different component arrangements. Details are not described herein again.

It is to be understood that in an embodiment of this application, the input unit 1004 may include a graphics processing unit (Graphics Processing Unit, GPU) 10041 and a microphone 10042. The graphics processing unit 10041 processes image data of static pictures or videos captured by an image capture apparatus (such as a camera) in a video capture mode or an image capture mode. The display unit 1006 may include a display panel 10061. The display panel 10061 may be configured in the form of a liquid crystal display, an organic light-emitting diode, or the like. The user input unit 1007 includes at least one of a touch panel 10071 and another input device 10072. The touch panel 10071 is alternatively referred to as a touchscreen. The touch panel 10071 may include two parts: a touch detection apparatus and a touch controller. Another input device 10072 may include, but is not limited to, a physical keyboard, a functional key (such as a volume control key or a switch key), a track ball, a mouse, and a joystick. Details are not described herein again.

In embodiments of this application, after receiving downlink data from a network side device, the radio frequency unit 1001 may transmit the downlink data to the processor 1010 for processing. In addition, the radio frequency unit 1001 may send uplink data to the network side device. Generally, the radio frequency unit 1001 includes, but is not limited to, an antenna, an amplifier, a transceiver, a coupler, a low noise amplifier, a duplexer, and the like.

The memory 1009 may be configured to store a software program or instructions and various types of data. The memory 1009 may mainly include a first storage area storing a program or instructions and a second storage area storing data. The first storage area may store an operating system, an application or instructions required by at least one function (for example, a sound playback function and an image display function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), or a direct rambus random access memory (Direct Rambus RAM, DR RAM). The memory 1009 in the embodiments of this application includes, but is not limited to, these and any other suitable types of memories.

The processor 1010 may include one or more processing units. Optionally, the processor 1010 integrates an application processor and a modulation and demodulation processor. The application processor mainly processes operations related to an operating system, a user interface, an application program, and the like. The modulation and demodulation processor mainly processes a wireless communication signal, for example, a baseband processor. It may be understood that the foregoing modulation and demodulation processor may alternatively not be integrated into the processor 1010.

The radio frequency unit 1001 is configured receive, from a network side device, parameter configuration information corresponding to one or more serving cells. The parameter configuration information includes timing advance group TAG identifiers, and the TAG identifiers are associated with respective transmission objects. The processor 1010 is configured to determine, in the transmission objects corresponding to the one or more serving cells according to the parameter configuration information, a target transmission object corresponding to a target serving cell in which the terminal is located, and to determine an uplink transmission time of the target transmission object according to a target TAG identifier associated with the target transmission object.

In this embodiment of this application, parameter configuration information corresponding to one or more serving cells is received from a network side device. The parameter configuration information includes TAG identifiers, and the TAG identifiers are associated with respective transmission objects. A target transmission object corresponding to a target serving cell in which the terminal is located is determined in the transmission objects corresponding to the one or more serving cells according to the parameter configuration information. Further, an uplink transmission time of the target transmission object is determined according to a target TAG identifier associated with the target transmission object. It may be learned that in the technical solution, the network side device can pre-configure parameter configuration information corresponding to one or more serving cells and send the parameter configuration information to a terminal, so that the terminal can dynamically determine an uplink transmission time of a target transmission object according to a TAG identifier corresponding to a target serving cell in which the terminal is located, and not use the same uplink transmission time for all transmission objects. In addition, it can be ensured that uplink transmission times of a plurality of TRPs are accurate, thereby improving uplink transmission performance.

Optionally, the transmission object includes at least one of the following: a control resource set pool index, a sounding reference signal SRS resource set, a transmission configuration indicator TCI state, a TCI state pool, a synchronization signal block SSB group, and a physical cell identifier PCI.

Optionally, the parameter configuration information includes two TAG identifiers, and each TAG identifier is associated with one uplink transmission object; or,
the parameter configuration information includes one TAG identifier, and the TAG identifier is associated with two transmission objects; or,
the parameter configuration information includes one TAG identifier, and the TAG identifier is associated with one transmission object.

Optionally, the plurality of serving cells are configured with the same TAG identifier, and the same TAG identifier is associated with the same transmission object.

Optionally, each TAG identifier is associated with one downlink frame time.

The processor 1010 is further configured to:
determine, according to the downlink frame time corresponding to the target TAG identifier, an uplink reference time corresponding to the target TAG identifier;
determine an uplink time adjustment amount corresponding to the target TAG identifier; and determine the uplink transmission time of the target transmission object according to the uplink reference time and the uplink time adjustment amount.

Optionally, the processor 1010 is further configured to:
determine a reference cell in a first serving cell according to the target TAG identifier, where the target TAG indicated by the target TAG identifier corresponds to a plurality of first serving cells; and
determine the downlink frame time of the transmission object corresponding to the reference cell as the uplink reference time corresponding to the target TAG identifier.

Optionally, the processor 1010 is further configured to:
determine the first serving cell configured with two TAG identifiers, each of which is associated with one transmission object, as the reference cell;
   or,
determine the first serving cell configured with only one TAG identifier as the reference cell.

Optionally, a plurality of transmission objects are configured in the target serving cell; and the target serving cell is a primary cell configured with two TAG identifiers, where
a TAG corresponding to each of the two TAG identifiers is configured as a first-type TAG, or a TAG corresponding to one of the two TAG identifiers is configured as the first-type TAG; and the first-type TAG is the TAG including the primary cell.

Optionally, the TAG corresponding to each of the two TAG identifiers corresponding to the target serving cell is configured as the first-type TAG. The processor 1010 is further configured to:
release, if one first-type TAG is out of synchronization, uplink transmission of the transmission object associated with the one first-type TAG.

Optionally, the TAG corresponding to one of the two TAG identifiers corresponding to the target serving cell is configured as the first-type TAG. The processor 1010 is further configured to:
release, if the first-type TAG is out of synchronization, all uplink transmission corresponding to the terminal.

Optionally, the processor 1010 is further configured to:
determine, according to PRC configuration information sent by the network side device, the TAG corresponding to one of the two TAG identifiers as the first-type TAG.

Optionally, a plurality of TRPs are configured between the serving cells. The target serving cell is a primary cell configured with two TAG identifiers.

The processor 1010 is further configured to:
determine a TAG corresponding to the TAG identifier associated with the target transmission object as a first-type TAG. The first-type TAG is the TAG including the primary cell.

Optionally, the processor 1010 is further configured to:
release, if the first-type TAG is out of synchronization, all uplink transmission corresponding to the terminal.

Optionally, the processor 1010 is further configured to:
receive a physical downlink control channel PDCCH associated with the target transmission object, where the PDCCH carries an object identifier of the target transmission object and/or the target TAG identifier;
send, based on the PDCCH, the first information corresponding to the target transmission object to the network side device, where the first information is used for determining the uplink time adjustment amount corresponding to the target transmission object; and
receive a random access response RAR sent by the network side device, where the RAR carries the uplink time adjustment amount.

Optionally, a quasi co-location QCL relationship of the PDCCH is determined based on a QCL relationship of type1 common search space CSS corresponding to the PDCCH, or is determined based on a PDCCH associated with the same transmission object as the type1CSS.

Optionally, under a first condition, the QCL relationship of the PDCCH is determined based on the QCL relationship of the type1CSS corresponding to the PDCCH.

The first condition includes: the PDCCH is from a second serving cell not belonging to the primary cell, or the PDCCH is from a third serving cell corresponding to an associated PCI of the primary cell.

Optionally, the processor 1010 is further configured to:
discard, if the target serving cell corresponds to two target transmission objects and uplink transmission times of the two target transmission objects overlap with each other, uplink transmission of a first transmission object of the two target transmission objects.

Optionally, the uplink transmission of the first transmission object includes at least one of the following:
uplink transmission associated with a specific control resource set pool index; and
uplink transmission with a relatively late uplink transmission time.

Optionally, the processor 1010 is further configured to:
report to the network side device that the terminal has a discarding capability for the uplink transmission of the first transmission object.

Optionally, the target serving cell corresponds to two target transmission objects, and an interval between uplink transmission of the two target transmission objects is greater than or equal to a preset threshold; and
the preset threshold is reported by the terminal to the network side device, or the preset threshold is configured by an RRC, or the preset threshold is predefined based on a protocol between the terminal and the network side device.

Embodiments of this application further provide a network side device, including a processor and a communication interface. The processor is configured to configure parameter configuration information corresponding to one or more serving cells. The communication interface is configured to send the parameter configuration information to a terminal. The parameter configuration information includes TAG identifiers, and the TAG identifiers are associated with respective transmission objects. The parameter configuration information is used for determining an uplink transmission time of a target transmission object corresponding to a target serving cell. The network side device embodiment corresponds to the foregoing network side device method embodiment. Various implementation processes and implementations of the foregoing method embodiments are all applicable to the network side device embodiment, and the same technical effects can be achieved.

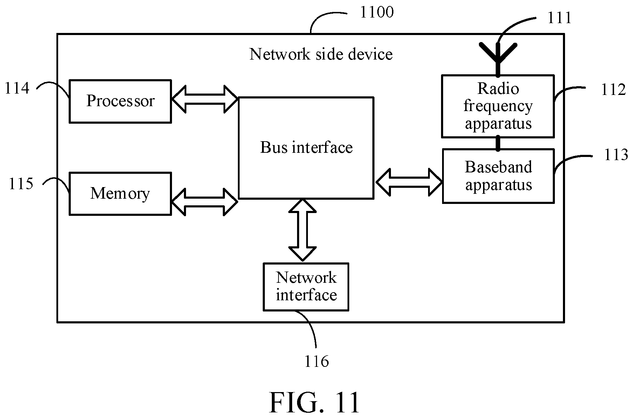

Specifically, embodiments of this application further provide a network side device. As shown in FIG. 11, the network side device 1100 includes: an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information through the antenna 111, and transmits the received information to the baseband apparatus 113 for processing. In a downlink direction, the baseband apparatus 113 performs processing on information to be transmitted and transmits processed information to the radio frequency apparatus 112. The radio frequency apparatus 112 performs processing on the received information and transmits the processed information through the antenna 111.

The method performed by the network side device in the above embodiments may be implemented in the baseband apparatus 113. The baseband apparatus 113 includes a baseband processor.

For example, the baseband apparatus 113 may include at least one baseband board. A plurality of chips are arranged on the baseband board, as shown in FIG. 11, for example, one of the chips is a baseband processor and is connected to the memory 115 through a bus interface to invoke a program in the memory 115 to perform operations of the network device shown in the above method embodiments.

The network side device may further include a network interface 116, for example, the interface is a common public radio interface (common public radio interface, CPRI).

Specifically, the network side device 1100 according to the embodiments of this application further includes: instructions or a program stored in the memory 115 and executable on the processor 114. The processor 114 invokes the instructions or the program in the memory 115 to perform the method performed by various modules shown in FIG. 6, and the same technical effects are achieved. To avoid repetition, details are not described herein again.

Embodiments of this application further provide a readable storage medium. The readable storage medium stores a program or instructions. The program or the instructions implement, when executed by a processor, various processes of the foregoing uplink transmission time determination method, and the same technical effects are achieved. To avoid repetition, details are not described herein again.

The processor is a processor in the terminal in the foregoing embodiments. The readable storage medium includes a computer-readable storage medium, for example, a computer read only memory ROM, a random-access memory RAM, a magnetic disk, or an optical disk.

Embodiments of this application further provide a chip. The chip includes a processor and a communication interface. The communication interface is coupled to the processor. The processor is configured to run a program or instructions to implement various processes of the foregoing uplink transmission time determination method, and the same technical effects are achieved. To avoid repetition, details are not described herein again.

It is to be understood that the chip mentioned in the embodiments of this application may alternatively be referred to as a system-level chip, a system chip, a chip system, a system on chip, or the like.

Embodiments of this application further provide a computer program/a program product. The computer program/the program product is stored in a storage medium. The computer program/the program product is executed by at least one processor to implement various processes of the foregoing uplink transmission time determination method, and the same technical effects can be achieved. To avoid repetition, details are not described herein again.

Embodiments of this application further provide an uplink transmission time determination system, including: a terminal and a network side device. The terminal may be configured to perform steps of the foregoing uplink transmission time determination method applied to a terminal side. The network side device may be configured to perform steps of the foregoing uplink transmission time determination method applied to the network side device.

It is to be noted that, terms "include", "comprise", or any other variation thereof herein are intended to cover a non-exclusive inclusion, such that a process, method, article or apparatus including a series of elements not only includes those elements, but also includes other elements that are not explicitly listed, or includes elements inherent to such a process, method, article or apparatus. Without more limitations, elements defined by the sentence "including one" does not exclude that there are other same elements in the process, the method, the article, or the apparatus. In addition, it is to be noted that scopes of the methods and apparatuses in implementations of this application are not limited to performing functions in an order shown or discussed, but may alternatively include performing the functions in a substantially simultaneous manner or in a reverse order according to the functions involved. For example, the described methods may be implemented in an order different from that described, and various steps may be added, omitted, or combined. In addition, features described with reference to some examples may alternatively be combined in other examples.

Through descriptions of the above implementations, those skilled in the art may clearly learn that the methods according to the foregoing embodiments may be implemented by software and a necessary universal hardware platform, or may be implemented by hardware of course. However, the former is a better implementation in many cases. Based on such an understanding, the technical solutions of this application essentially, or the part contributing to the conventional technology may be embodied in the form of a computer software product. The computer software product is stored in a storage medium (for example, a ROM/RAM, a magnetic disc, or a compact disc) including several instructions to enable a terminal (which may be a mobile phone, a computer, a server, an air conditioner, a network side device, or the like) to perform the methods described in various embodiments of this application.

Embodiments of this application have been described above with reference to accompanying drawings. However, this application is not limited to the foregoing specific implementations. The foregoing specific embodiments are merely examples rather than restrictions. Those of ordinary skill in the art may make many forms under the teaching of this application without departing from the spirit of this application and the scope of protection of claims, which all fall within the scope of protection of this application.

## Claims

1. An uplink transmission time determination method, applied to a terminal, comprising:
receiving, from a network side device, parameter configuration information corresponding to one or more serving cells, wherein the parameter configuration information comprises timing advance group TAG identifiers, and the TAG identifiers are associated with respective transmission objects;
determining, in the transmission objects corresponding to the one or more serving cells according to the parameter configuration information, a target transmission object corresponding to a target serving cell in which the terminal is located; and
determining an uplink transmission time of the target transmission object according to a target TAG identifier associated with the target transmission object.

2. The method according to claim 1, wherein the transmission object comprises at least one of the following: a control resource set pool index, a sounding reference signal SRS resource set, a transmission configuration indicator TCI state, a TCI state pool, a synchronization signal block SSB group, and a physical cell identifier PCI.

3. The method according to claim 1, wherein the parameter configuration information comprises two TAG identifiers, and each TAG identifier is associated with one uplink transmission object; or,
the parameter configuration information comprises one TAG identifier, and the TAG identifier is associated with two transmission objects; or,
the parameter configuration information comprises one TAG identifier, and the TAG identifier is associated with one transmission object.

4. The method according to claim 3, wherein the plurality of serving cells are configured with the same TAG identifier, and the same TAG identifier is associated with the same transmission object.

5. The method according to claim 3 or 4, wherein each TAG identifier is associated with one downlink frame time;
the determining an uplink transmission time of the target transmission object according to a target TAG identifier associated with the target transmission object comprises:
determining, according to the downlink frame time corresponding to the target TAG identifier, an uplink reference time corresponding to the target TAG identifier;
determining an uplink time adjustment amount corresponding to the target TAG identifier; and
determining the uplink transmission time of the target transmission object according to the uplink reference time and the uplink time adjustment amount.

6. The method according to claim 5, wherein the determining an uplink reference time corresponding to the target TAG identifier according to the downlink frame time corresponding to the target TAG identifier comprises:
determining a reference cell in a first serving cell according to the target TAG identifier, wherein the target TAG indicated by the target TAG identifier corresponds to a plurality of first serving cells; and
determining the downlink frame time of the transmission object corresponding to the reference cell as the uplink reference time corresponding to the target TAG identifier.

7. The method according to claim 6, wherein the determining a reference cell in a first serving cell according to the target TAG identifier comprises:
determining the first serving cell configured with two TAG identifiers, each of which is associated with one transmission object, as the reference cell;
or,
determining the first serving cell configured with only one TAG identifier as the reference cell.

8. The method according to claim 5, wherein a plurality of transmission objects are configured in the target serving cell; and the target serving cell is a primary cell configured with two TAG identifiers, wherein
a TAG corresponding to each of the two TAG identifiers is configured as a first-type TAG, or a TAG corresponding to one of the two TAG identifiers is configured as the first-type TAG; and the first-type TAG is the TAG comprising the primary cell.

9. The method according to claim 8, wherein the TAG corresponding to each of the two TAG identifiers corresponding to the target serving cell is configured as the first-type TAG; and the method further comprises:
releasing, if one first-type TAG is out of synchronization, uplink transmission of the transmission object associated with the one first-type TAG.

10. The method according to claim 8, wherein the TAG corresponding to one of the two TAG identifiers corresponding to the target serving cell is configured as the first-type TAG; and the method further comprises:
releasing, if the first-type TAG is out of synchronization, all uplink transmission corresponding to the terminal.

11. The method according to claim 10, further comprising:
determining, according to PRC configuration information sent by the network side device, the TAG corresponding to one of the two TAG identifiers as the first-type TAG.

12. The method according to claim 5, wherein a plurality of TRPs are configured between the serving cells; the target serving cell is a primary cell configured with two TAG identifiers; and
the method further comprises:
determining a TAG corresponding to the TAG identifier associated with the target transmission object as a first-type TAG; and the first-type TAG is the TAG comprising the primary cell.

13. The method according to claim 12, further comprising:
releasing, if the first-type TAG is out of synchronization, all uplink transmission corresponding to the terminal.

14. The method according to claim 5, wherein the determining an uplink time adjustment amount corresponding to the target TAG identifier comprises:
receiving a physical downlink control channel PDCCH associated with the target transmission object, wherein the PDCCH carries an object identifier of the target transmission object and/or the target TAG identifier;
sending, based on the PDCCH, the first information corresponding to the target transmission object to the network side device, wherein the first information is used for determining the uplink time adjustment amount corresponding to the target transmission object; and
receiving a random access response RAR sent by the network side device, wherein the RAR carries the uplink time adjustment amount.

15. The method according to claim 14, wherein a quasi co-location QCL relationship of the PDCCH is determined based on a QCL relationship of type1 common search space CSS corresponding to the PDCCH, or is determined based on a PDCCH associated with the same transmission object as the type1CSS.

16. The method according to claim 15, wherein under a first condition, the QCL relationship of the PDCCH is determined based on the QCL relationship of the type1CSS corresponding to the PDCCH; and
the first condition comprises: the PDCCH is from a second serving cell not belonging to the primary cell, or the PDCCH is from a third serving cell corresponding to an associated PCI of the primary cell.

17. The method according to claim 1, further comprising:
discarding, if the target serving cell corresponds to two target transmission objects and uplink transmission times of the two target transmission objects overlap with each other, uplink transmission of a first transmission object of the two target transmission objects.

18. The method according to claim 17, wherein the uplink transmission of the first transmission object comprises at least one of the following:
an uplink transmission associated with a specific control resource set pool index; and
an uplink transmission with a relatively late uplink transmission time.

19. The method according to claim 17, before the discarding uplink transmission of a first transmission object of the two target transmission objects, further comprising:
reporting to the network side device that the terminal has a discarding capability for the uplink transmission of the first transmission object.

20. The method according to claim 1, wherein the target serving cell corresponds to two target transmission objects, and an interval between uplink transmission of the two target transmission objects is greater than or equal to a preset threshold; and
the preset threshold is reported by the terminal to the network side device, or the preset threshold is configured by an RRC, or the preset threshold is predefined based on a protocol between the terminal and the network side device.

21. An uplink transmission time determination method, applied to a network side device, comprising:
sending, to a terminal, parameter configuration information corresponding to one or more serving cells, wherein the parameter configuration information comprises TAG identifiers, and the TAG identifiers are associated with respective transmission objects, and the parameter configuration information is used for determining an uplink transmission time of a target transmission object corresponding to a target serving cell.

22. The method according to claim 21, wherein the transmission object comprises at least one of the following: a resource set pool index, an SRS resource set, a TCI state, a TCI state pool, an SSB group, and a PCI.

23. The method according to claim 21, wherein the parameter configuration information comprises two TAG identifiers, and each TAG identifier is associated with one uplink transmission object; or,
the parameter configuration information comprises one TAG identifier, and the TAG identifier is associated with two transmission objects; or,
the parameter configuration information comprises one TAG identifier, and the TAG identifier is associated with one transmission object.

24. The method according to claim 21, wherein the plurality of serving cells are configured with the same TAG identifier, and the same TAG identifier is associated with the same transmission object.

25. The method according to claim 21, wherein each TAG identifier is associated with one downlink frame time.

26. The method according to claim 21, further comprising:
indicating, for the serving cell configured with two TAG identifiers, a TAG corresponding to one of the two TAG identifiers as a first-type TAG, wherein the first-type TAG is the TAG comprising the primary cell.

27. The method according to claim 21, further comprising:
sending RRC configuration information to the terminal, wherein
the RRC configuration information carries at least one of the following:
a downlink DL reference signal or a DL channel of the transmission object corresponding to each serving cell;
indication information of the first-type TAG; and
a minimum threshold of an interval between uplink transmission of two transmission objects corresponding to the same serving cell.

28. The method according to claim 21, further comprising:
sending a PDCCH associated with the target transmission object to the terminal, wherein the PDCCH carries an object identifier of the target transmission object and/or a target TAG identifier associated with the target transmission object;
receiving first information that is sent by the terminal and that corresponds to the target transmission object; and
determining, according to the first information, an uplink time adjustment amount corresponding to the target transmission object, carrying the uplink time adjustment amount in an RAR, and sending the RAR to the terminal.

29. The method according to claim 21, further comprising:
receiving a reporting capability of the terminal, wherein the capability comprises: in a case that the serving cell corresponds to two transmission objects and uplink transmission times of the two objects overlap with each other, a discarding capability for uplink transmission of a first transmission object; and the uplink transmission of the first transmission object is uplink transmission satisfying a discarding condition, wherein
the discarding condition comprises at least one of the following: associating a specific control resource set pool index, and a relatively late uplink transmission time.

30. A terminal, comprising:
a first receiving module, configured to receive, from a network side device, parameter configuration information corresponding to one or more serving cells, wherein the parameter configuration information comprises timing advance group TAG identifiers, and the TAG identifiers are associated with respective transmission objects;
a first determination module, configured to determine, in the transmission objects corresponding to the one or more serving cells according to the parameter configuration information, a target transmission object corresponding to a target serving cell in which the terminal is located; and
a second determination module, configured to determine an uplink transmission time of the target transmission object according to a target TAG identifier associated with the target transmission object.

31. A network side device, comprising:
a first sending module, configured to send parameter configuration information corresponding to one or more serving cells to a terminal, wherein the parameter configuration information comprises TAG identifiers, and the TAG identifiers are associated with respective transmission objects, and the parameter configuration information is used for determining an uplink transmission time of a target transmission object corresponding to a target serving cell.

32. A terminal, comprising a processor and a memory, wherein the memory stores a program or instructions executable on the processor, and when the program or instructions implement, when executed by the processor, steps of the uplink transmission time determination method according to any one of claims 1 to 20.

33. A network side device, comprising a processor and a memory, wherein the memory stores a program or instructions executable on the processor, and the program or the instructions implement, when executed by the processor, steps of the uplink transmission time determination method according to any one of claims 21 to 29.

34. A readable storage medium, wherein the readable storage medium stores a program or instructions, and the program or the instructions implement, when executed by the processor, steps of the uplink transmission time determination method according to any one of claims 1 to 20, or implement steps of the uplink transmission time determination method according to any one of claims 21 to 29.
